# EUROPEAN PATENT SPECIFICATION

(11) **EP 2 336 227 B1**
(45) Date of publication and mention of the grant of the patent: **13.02.2013**
(21) Application number: 10194967.5
(22) Date of filing: 14.12.2010
(51) Int. Cl.: C08K 3/00

(54) **Tire with innerliner containing slate powder**
Reifen mit Innenauskleidung mit Schiefermehl
Pneu avec garniture contenant une poudre d'ardoise

(30) Priority: 17.12.2009 US 640032
(43) Date of publication of application: 22.06.2011
(73) Proprietor: The Goodyear Tire & Rubber Company, Akron, OH 44316-0001 (US)
(72) Inventor: Welter, Carolin Anna, 69207 Sandhausen (DE); Mans, Thomas Hermann, D-36163 Poppenhausen (DE); Schweitzer, Claude, L-7750 Colmar-Berg (LU)
(74) Representative: Kutsch, Bernd

(56) References cited:
- EP-A2- 1 643 485
- DE-A1-102007 047 586

## Description

### Background of the Invention

A pneumatic rubber tire is conventionally of a toroidal shape and comprises a carcass with a cavity in which its closure is typically completed with a rigid rim onto which the tire is to be mounted.

The inner surface of a pneumatic tire, namely a surface of said cavity which is sometimes referred to as an "innerliner" is typically a rubber layer composed of an elastomeric composition designed to prevent, or retard, the permeation of air and moisture into the tire carcass from the aforesaid cavity which becomes the tire's inner air chamber. Such tire innerliners, or innerliner rubber layers, are well known to those having skill in such art.

Butyl rubber is typically relatively impermeable to air and moisture and is often used as a major portion of the tire innerliner composition and can be in a form of butyl rubber or halobutyl rubber such as, for example, bromobutyl rubber. For example, see US-A- 3,808,177. Butyl rubber is an isobutylene copolymer with a small amount of isoprene which typically contains only from about 0.5 to about 5 weight percent units derived from isoprene.

Halobutyl and butyl rubbers are usually one of the most expensive elastomers used in a tire. Given the competitive tire market and the continued need to lower the cost of manufacturing tires, there exists a desire to decrease the cost of innerliners while maintaining their performance.

### Summary of the Invention

The present invention is directed to a pneumatic tire in accordance with claim 1.

Dependent claims refer to preferred embodiments of the invention.

### Description of the Invention

There is disclosed a pneumatic tire comprising a carcass and an innerliner radially inward of and in direct contact with the carcass, the innerliner comprising a rubber composition comprising:
100 parts by weight of at least one elastomer; and
from 10 to 80 parts by weight, per 100 parts by weight of elastomer (phr) of carbon black; and
from 1 to 30 phr of slate powder.

It has been found unexpectedly that an inclusion in the tire innerliner rubber composition of a slate powder, results in an innerliner having high resistance to permeability with acceptable tear strength.

In the description of the invention, the term "phr" relates to parts by weight of a particular ingredient per 100 parts by weight of rubber contained in a rubber composition. The terms "rubber" and "elastomer" are used interchangeably unless otherwise indicated, the terms "cure" and "vulcanize" may be used interchangeably unless otherwise indicated and the terms "rubber composition" and "rubber compound" may be used interchangeably unless otherwise indicated. The term "butyl type rubber" is used herein to refer to butyl rubber (copolymer of isobutylene with a minor amount comprised of, for example 0.5 to 5 weight percent, alternatively from 1 to 3 percent, of units derived from isoprene), and halobutyl rubber as chlorobutyl rubber and bromobutyl rubber (chlorinated and brominated butyl rubber, respectively) unless otherwise indicated.

The rubber composition for use in the innerliner of the present invention includes an elastomer. Suitable elastomers include butyl type rubber, including butyl rubber and halobutyl rubbers such as chlorobutyl rubber and bromobutyl rubber. Other suitable elastomers include synthetic polyisoprene, natural rubber, styrene butadiene rubber, and polybutadiene.

An alternative butyl rubber for the innerliner comprises a brominated copolymer of isobutylene and paramethylstyrene. The brominated copolymer conventionally contains from 0.3 to 2 weight percent bromination. Exemplary of such a brominated copolymer is Exxpro® from ExxonMobil Chemical reportedly having a Mooney (ML 1+8) viscosity at 125ºC of from 45 to 55, a paramethylstyrene content of about 5 weight percent, isobutylene content of 94 to 95 weight percent, and a bromine content of 0.8 weight percent. Alternately, the butyl rubber may comprise a combination of a copolymer of isobutylene and isoprene together with a brominated copolymer of isobutylene and paramethylstyrene.

The rubber composition for use in the innerliner also includes slate powder. The slate powder has a size distribution that may be determined for example by vibrating screen analysis, and may be expressed as a cumulative size distribution. In one embodiment, the slate powder comprises at least 20 percent by weight of particles having a size less than 75 microns. In one embodiment, the slate powder comprises at least 40 percent by weight of particles having a size less than 150 microns. In one embodiment, the slate powder comprises at least 60 percent by weight of particles having a size less than 300 microns. In one embodiment, the slate powder comprises at least 80 percent by weight of particles having a size less than 850 microns. In one embodiment, the slate powder comprises at least 90 percent by weight of particles having a size less than 1700 microns. Suitable slate powder may be obtained from Theis & Boeger, Hunsrueck, Germany.

In one embodiment, the amount of slate powder may be present in the rubber composition in an amount ranging from 1 to 30 phr. In another embodiment, the amount of slate powder may be present in the rubber composition in an amount ranging from 5 to 20 phr or from 8 to 15 phr such as 10 phr, 15 phr or 18 phr.

In addition to the aforesaid elastomers and slate powder, for the tire innerliner, the innerliner rubber composition may also contain other conventional ingredients commonly used in rubber vulcanizates, for example, tackifier resins, processing aids, carbon black, silica, talc, clay, mica, antioxidants, antiozonants, stearic acid, activators, waxes and oils as may be desired. In one embodiment, carbon black may be used in a range of from 10 to 80 phr. In another embodiment, carbon black may be used in a range of from 20 to 60 phr.

The vulcanization of the compound for use as an innerliner is conducted in the presence of a sulfur vulcanizing agent. Examples of suitable sulfur vulcanizing agents include elemental sulfur (free sulfur) or sulfur donating vulcanizing agents, for example, an amine disulfide, polymeric disulfide or sulfur olefin adducts. Preferably, the sulfur vulcanizing agent is elemental sulfur. As known to those skilled in the art, sulfur vulcanizing agents are used in an amount ranging from about 0.2 to 5.0 phr with a range of from about 0.5 to 3.0 being preferred.

Accelerators are used to control the time and/or temperature required for vulcanization and to improve the properties of the vulcanizate. A single accelerator system may be used, i.e., primary accelerator in conventional amounts ranging from about 0.5 to 3.0 phr. In the alternative, combinations of two or more accelerators may be used which may consist of a primary accelerator which is generally used in the larger amount (0.3 to 3.0 phr), and a secondary accelerator which is generally used in smaller amounts (0.05 to 1.0 phr) in order to activate and to improve the properties of the vulcanizate. In addition, delayed action accelerators may be used which are not affected by normal processing temperatures but produce satisfactory cures at ordinary vulcanization temperatures. Suitable types of accelerators that may be used are amines, disulfides, guanidines, thioureas, thiazoles, thiurams, sulfenamides, dithiocarbamate and xanthates. Preferably, the primary accelerator is a disulfide or sulfenamide.

Various synthetic, amorphous silicas may be used for the tire innerliner composition. Representative of such silicas are, for example and not intended to be limiting, precipitated silicas as, for example, HiSil 210™ and HiSil 243™ from PPG Industries, as well as various precipitated silicas from J.M. Huber Company, various precipitated silicas from Degussa Company and various precipitated silicas from Rhodia Company.

Various coupling agents may be used for the various synthetic, amorphous silicas, particularly the precipitated silicas, to couple the silica aggregates to various of the elastomers. Representative of such coupling agents are, bis(3-trialkoxysilylpropyl) polysulfides wherein at least two, and optionally all three, of its alkoxy groups are ethoxy groups and its polysulfidic bridge comprising an average of from 2 to 4, alternatively from 2 to 2.6 or an average of from 3.4 to 3.8 connecting sulfur atoms, and an alkoxyorganomercaptosilane which may optionally have its mercpto moiety blocked with a suitable blocking agent during the mixing thereof with the rubber composition, wherein said alkoxy group is preferably an ethoxy group.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s).

In practice the innerliner rubber composition, or compound, is formed into a gum strip. As known to those skilled in the art, a gum strip is produced by a press or passing a rubber compound through a mill, calender, multi-head extruder or other suitable means. Preferably, the gum strip is produced by a calender because greater uniformity is believed to be provided. The uncured gum strip is then constructed as an inner surface (exposed inside surface) of an uncured rubber tire structure, also known as the carcass. The innerliner is then sulfur co-cured with the tire carcass during the tire curing operation under conditions of heat and pressure.

Vulcanization of the tire of the present invention is generally carried out, for example, at temperatures of between 100°C and 200°C. Preferably, the vulcanization is conducted at temperatures ranging from 110°C to 180°C. Any of the usual vulcanization processes may be used such as heating in a press or mold, heating with superheated steam or hot salt or in a salt bath. Preferably, the heating is accomplished in a press or mold in a method known to those skilled in the art of tire curing.

As a result of this vulcanization, the innerliner becomes an integral part of the tire by being co-cured therewith.

Therefore, in practice, the innerliner may, for example, be first constructed as an inner surface of an uncured rubber tire as an uncured compounded rubber gum strip and is then co-cured with the tire during a tire curing operation wherein the said rubber gum strip may have, for example, a thickness in the range of 0.04 to 1, alternately in a range of from 0.05 to 0.5, centimeters, depending somewhat the type, size and intended use of the tire.

The pneumatic tire with the integral innerliner may be constructed in the form of a passenger tire, truck tire, or other type of bias or radial pneumatic tire.

The following examples are presented in order to illustrate but not limit the present invention. The parts and percentages are by weight unless otherwise noted

### Example 1

In this example, measurement of the particle size distribution of a slate powder is illustrated. A slate powder obtained from Theis & Boerger (Hunsruek, Germany) was analyzed for particle size distribution using vibrating screen sieves. A 100 g sample of the slate powder was passed through a series of five stacked screen sieves using a Retsch Vibrotronic analyzer set at "oscillation 40" and "interval." The amount retained on each screen was weighed after 60 minutes vibration time, with results shown in Table 1 for two repetitions, runs 1 and 2.

**Table 1**

| sieve size | | amount retained | | average weight % | |
|---|---|---|---|---|---|
| mesh | microns | run 1, g | run 2, g | individual cumulative | |
| 12 | 1700 | 5.4 | 6.6 | 6 | 100 |
| 20 | 850 | 7.1 | 8.1 | 8 | 94 |
| 50 | 300 | 17.5 | 16.9 | 17 | 86 |
| 100 | 150 | 27.2 | 25.3 | 26 | 69 |
| 200 | 75 | 18.7 | 20.3 | 20 | 43 |
| thru 200 | <75 | 24.1 | 22.8 | 23 | 23 |
| total | | 100 | 100 | 100 | |

As seen in Table 1, the slate powder showed a particle size distribution with at least 94 percent less than 1700 microns, at least 86 percent less than 850 microns, at least 69 percent less than 300 microns, at least 43 percent less than 150 microns, and at least 23 percent less than 75 microns. It is to be appreciated that the experimental weight percentages represent the amount passed through the given sieve at the end of the experiment time of sixty minutes; the measured amounts therefore represent a somewhat low estimate of the actual percentages and the amounts are expressed as at least the amount measured.

### Example 2

In this example, the effect of dispersing the slate powder of Example 1 in a bromobutyl rubber innerliner composition is illustrated. All amounts are in parts by weight. The rubber compositions were mixed using a two phase mixing procedure, with addition of the elastomers and fillers in a first, non-productive mix step, followed by addition of conventional amounts of curatives in a second, productive mix step, to obtain a rubber compound.

The mixed compound was formed into test specimens and cured at 170ºC for 25 minutes. Cured samples were then tested for air permeability. Air permeabilities are shown in Table 2 for various filler volumes.

Adhesion test samples were prepared by a standard peel adhesion test on 1" wide specimens. Strip adhesion samples were made by preparation of a sandwich of two layers of the compound separated by a mylar window sheet. The sandwich was cured and 1" samples cut centered on each window in the mylar. The cured samples were then tested for adhesion between the sheets in the area defined by the mylar window by 180 degree pull on a test apparatus. Cured samples were then tested for adhesion at the indicated test conditions. Results of the adhesion tests are shown in Table 2 for various filler volumes.

**Table 2**

| Sample No. | 1 | 2 | 3 | 4 | 5 | 6 |
|---|---|---|---|---|---|---|
| Volume % Filler | | | | | | |
| Carbon Black, phr | 56 | 44 | 28 | 56 | 56 | 56 |
| Slate Powder, phr | 0 | 12 | 28 | 10 | 20 | 5 |
| | | | | | | |

| Tensile Properties Cure: 25 min @ 170°C; Test: @ 23°C | | | | | | |
|---|---|---|---|---|---|---|
| Elongation, % | 1001 | 804 | 764 | 705 | 669 | 751 |
| Mod 100%, MPa | 0.7 | 0.9 | 0.9 | 1.1 | 1.1 | 1.1 |
| Mod 300%, MPa | 1.9 | 2.1 | 1.8 | 3 | 2.9 | 2.9 |
| Tensile Strength, MPa | 7.4 | 6 | 5 | 6.3 | 5.8 | 6.6 |
| Shore A | 44.4 | 49.3 | 47.7 | 54.1 | 55.7 | 54 |
| Rebound | 11.3 | 11.3 | 11.6 | 11.1 | 11 | 11.1 |
| | | | | | | |

| Tear Strenqth Cure: 25 min @ 170°C; Test: @ 100°C | | | | | | |
|---|---|---|---|---|---|---|
| Tear Strength, N | 16 | 15.3 | 13.2 | 15.1 | 13.5 | 15.6 |
| | | | | | | |

| Air Diffusion Cure: 25 min @ 170°C; Test: @ 90°C. Gas =Air @ 6 MPa | | | | | | |
|---|---|---|---|---|---|---|
| Diffusion, cm³/min x 10⁸ | 8.27 | 4.48 | 6.00 | 9.51 | 5.34 | 6.61 |

As seen in Table 2, the combination of the slate powder and carbon black shows significantly improved permeability resistance and comparable tear resistance compared to carbon black alone, for constant filler weight. Such behavior is unexpected and surprising, suggesting a synergistic effect of the combination of the carbon black and slate powder.

## Claims

1. A pneumatic tire comprising a carcass and an innerliner radially inward of and in direct contact with the carcass, the innerliner comprising a rubber composition comprising 100 parts by weight of at least one elastomer, from 10 to 80 parts by weight, per 100 parts by weight of elastomer (phr) of carbon black, and from 1 to 30 phr of slate powder.

2. The pneumatic tire of claim 1 wherein the elastomer is selected from the group consisting of butyl rubber, chlorinated butyl rubber, brominated butyl rubber, synthetic polyisoprene, natural rubber, styrene butadiene rubber, polybutadiene, copolymer of isobutylene and paramethylstyrene, and brominated copolymer of isobutylene and paramethylstyrene.

3. The pneumatic tire of claim 1, wherein the elastomer is selected from the group consisting of butyl rubber, chlorinated butyl rubber, brominated butyl rubber, copolymer of isobutylene and paramethylstyrene, and brominated copolymer of isobutylene and paramethylstyrene.

4. The pneumatic tire of at least one of the previous claims, wherein the slate powder comprises at least 20 percent by weight of particles of a size less than 75 microns.

5. The pneumatic tire of claim 4 wherein the slate powder comprises at least 23 percent by weight of particles of a size less than 75 microns.

6. The pneumatic tire of at least one of the previous claims wherein the slate powder comprises at least 40 percent by weight of particles of a size less than 150 microns.

7. The pneumatic tire of claim 6 wherein the slate powder comprises at least 43 percent by weight of particles of a size less than 150 microns.

8. The pneumatic tire of at least one of the previous claims wherein the slate powder comprises at least 60 percent by weight of particles of a size less than 300 microns.

9. The pneumatic tire of claim 8 wherein the slate powder comprises at least 69 percent by weight of particles of a size less than 300 microns.

10. The pneumatic tire of at least one of the previous claims wherein the slate powder comprises at least 80 percent by weight of particles of a size less than 850 microns.

11. The pneumatic tire of claim 10 wherein the slate powder comprises at least 86 percent by weight of particles of a size less than 850 microns.

12. The pneumatic tire of at least one of the previous claims wherein the slate powder comprises at least 90 percent by weight of particles of a size less than 1700 microns.

13. The pneumatic tire of claim 12 wherein the slate powder comprises at least 94 percent by weight of particles of a size less than 1700 microns.

14. The pneumatic tire of at least one of the previous claims wherein the amount of slate powder ranges from 5 to 20 phr.

15. The pneumatic tire of at least one of the previous claims wherein the amount of carbon black ranges from 20 to 60 phr.

## Patentansprüche

1. Luftreifen, umfassend eine Karkasse und eine Innenisolierung radial einwärts von und in direktem Kontakt mit der Karkasse, wobei die Innenisolierung eine Kautschukzusammensetzung umfasst, umfassend 100 Gewichtsteile mindestens eines Elastomers, 10 bis 80 Gewichtsteile, je 100 Gewichtsteile Elastomer (ThK), Carbon Black, und 1 bis 30 ThK Schiefermehl.

2. Luftreifen nach Anspruch 1, wobei das Elastomer aus der Gruppe ausgewählt ist, bestehend aus Butylkautschuk, chloriertem Butylkautschuk, bromiertem Butylkautschuk, synthetischem Polyisopren, Naturkautschuk, StyrolButadien-Kautschuk, Polybutadien, Copolymer von Isobutylen und Paramethylstyrol, und bromiertem Copolymer von Isobutylen und Paramethylstyrol.

3. Luftreifen nach Anspruch 1, wobei das Elastomer aus der Gruppe ausgewählt ist, bestehend aus Butylkautschuk, chloriertem Butylkautschuk, bromiertem Butylkautschuk, Copolymer von Isobutylen und Paramethylstyrol, und bromiertem Copolymer von Isobutylen und Paramethylstyrol.

4. Luftreifen nach mindestens einem der vorgenannten Ansprüche, wobei das Schiefermehl mindestens 20 Gewichtsprozent Partikel mit einer Größe von weniger als 75 Mikron umfasst.

5. Luftreifen nach Anspruch 4, wobei das Schiefermehl mindestens 23 Gewichtsprozent Partikel mit einer Größe von weniger als 75 Mikron umfasst.

6. Luftreifen nach mindestens einem der vorgenannten Ansprüche, wobei das Schiefermehl mindestens 40 Gewichtsprozent Partikel mit einer Größe von weniger als 150 Mikron umfasst.

7. Luftreifen nach Anspruch 6, wobei das Schiefermehl mindestens 43 Gewichtsprozent Partikel mit einer Größe von weniger als 150 Mikron umfasst.

8. Luftreifen nach mindestens einem der vorgenannten Ansprüche, wobei das Schiefermehl mindestens 60 Gewichtsprozent Partikel mit einer Größe von weniger als 300 Mikron umfasst.

9. Luftreifen nach Anspruch 8, wobei das Schiefermehl mindestens 69 Gewichtsprozent Partikel mit einer Größe von weniger als 300 Mikron umfasst.

10. Luftreifen nach mindestens einem der vorgenannten Ansprüche, wobei das Schiefermehl mindestens 80 Gewichtsprozent Partikel mit einer Größe von weniger als 850 Mikron umfasst.

11. Luftreifen nach Anspruch 10, wobei das Schiefermehl mindestens 86 Gewichtsprozent Partikel mit einer Größe von weniger als 850 Mikron umfasst.

12. Luftreifen nach mindestens einem der vorgenannten Ansprüche, wobei das Schiefermehl mindestens 90 Gewichtsprozent Partikel mit einer Größe von weniger als 1700 Mikron umfasst.

13. Luftreifen nach Anspruch 12, wobei das Schiefermehl mindestens 94 Gewichtsprozent Partikel mit einer Größe von weniger als 1700 Mikron umfasst.

14. Luftreifen nach mindestens einem der vorgenannten Ansprüche, wobei die Menge an Schiefermehl sich auf 5 bis 20 ThK beläuft.

15. Luftreifen nach mindestens einem der vorgenannten Ansprüche, wobei die Menge an Carbon Black sich auf 20 bis 60 ThK beläuft.

## Revendications

1. Bandage pneumatique comprenant une carcasse et un calandrage intérieur à l'intérieur de la carcasse en direction radiale et en contact direct avec celle-ci, le calandrage intérieur comprenant une composition de caoutchouc comprenant 100 parties en poids d'au moins un élastomère, de 10 à 80 parties en poids par 100 parties en poids d'élastomère (phr) de noir de carbone et de 1 à 30 phr d'une poudre d'ardoise.

2. Bandage pneumatique selon la revendication 1, dans lequel élastomère est choisi parmi le groupe constitué par du caoutchouc butyle, du caoutchouc butyle chloré, du caoutchouc butyle bromé, du polyisoprène synthétique, du caoutchouc naturel, du caoutchouc de styrène-butadiène, du polybutadiène, un copolymère d'isobutylène et de paraméthylstyrène, et un copolymère bromé d'isobutylène et de paraméthylstyrène.

3. Bandage pneumatique selon la revendication 1, dans lequel élastomère est choisi parmi le groupe constitué par du caoutchouc butyle, du caoutchouc butyle chloré, du caoutchouc butyle bromé, un copolymère d'isobutylène et de paraméthylstyrène, et un copolymère bromé d'isobutylène et de paraméthylstyrène.

4. Bandage pneumatique selon au moins une des revendications précédentes, dans lequel la poudre d'ardoise comprend à concurrence d'au moins 20 % en poids, des particules dont la granulométrie est inférieure à 75 microns.

5. Bandage pneumatique selon la revendication 4, dans lequel la poudre d'ardoise comprend à concurrence d'au moins 23 % en poids, des particules dont la granulométrie est inférieure à 75 microns.

6. Bandage pneumatique selon au moins une des revendications précédentes, dans lequel la poudre d'ardoise comprend à concurrence d'au moins 40 % en poids, des particules dont la granulométrie est inférieure à 150 microns.

7. Bandage pneumatique selon la revendication 6, dans lequel la poudre d'ardoise comprend à concurrence d'au moins 43 % en poids, des particules dont la granulométrie est inférieure à 150 microns.

8. Bandage pneumatique selon au moins une des revendications précédentes, dans lequel la poudre d'ardoise comprend à concurrence d'au moins 60 % en poids, des particules dont la granulométrie est inférieure à 300 microns.

9. Bandage pneumatique selon la revendication 8, dans lequel la poudre d'ardoise comprend à concurrence d'au moins 69 % en poids, des particules dont la granulométrie est inférieure à 300 microns.

10. Bandage pneumatique selon au moins une des revendications précédentes, dans lequel la poudre d'ardoise comprend à concurrence d'au moins 80 % en poids, des particules dont la granulométrie est inférieure à 850 microns.

11. Bandage pneumatique selon la revendication 10, dans lequel la poudre d'ardoise comprend à concurrence d'au moins 86 % en poids, des particules dont la granulométrie est inférieure à 850 microns.

12. Bandage pneumatique selon au moins une des revendications précédentes, dans lequel la poudre d'ardoise comprend à concurrence d'au moins 90 % en poids, des particules dont la granulométrie est inférieure à 1700 microns.

13. Bandage pneumatique selon la revendication 12, dans lequel la poudre d'ardoise comprend à concurrence d'au moins 94 % en poids, des particules dont la granulométrie est inférieure à 1700 microns.

14. Bandage pneumatique selon au moins une des revendications précédentes, dans lequel la quantité de poudre d'ardoise se situe dans la plage de 5 à 20 phr.

15. Bandage pneumatique selon au moins une des revendications précédentes, dans lequel la quantité de poudre d'ardoise se situe dans la plage de 20 à 60 phr.
